# EUROPÄISCHE PATENTSCHRIFT

(11) **EP 0 908 789 B1**
(45) Veröffentlichungstag und Bekanntmachung des Hinweises auf die Patenterteilung: **28.07.2004**
(21) Anmeldenummer: 98118263.7
(22) Anmeldetag: 26.09.1998
(51) Int. Cl.: G03G 9/09, C09D 11/00, C09D 5/03

(54) **Verwendung von Pigment Yellow 155 in elektrophotographischen Tonern und Entwicklern und Ink-Jet-Tinten**
Use of Pigment Yellow 155 in electrophotographic toners or developers and ink jet inks
Utilisation de Pigment Yellow 155 dans des révélateurs et agent de développement électrophotographiques et encres d'impression par jet

(30) Priorität: 06.10.1997 DE 19744097; 07.02.1998 DE 19804899
(43) Veröffentlichungstag der Anmeldung: 14.04.1999
(73) Patentinhaber: Clariant GmbH, 65929 Frankfurt am Main (DE)
(72) Erfinder: Macholdt, Hans-Tobias Dr., 64297 Darmstadt-Eberstadt (DE); Baur, Rüdiger Dr., 65817 Eppstein-Niederjosbach (DE); Ritter, Josef Dr., 65812 Bad Soden (DE)

(56) Entgegenhaltungen:
- EP-A- 0 208 041
- EP-A- 0 705 886
- EP-A- 0 866 367
- EP-A- 0 875 788
- WO-A-97/08255
- US-A- 4 759 801

## Beschreibung

Verwendung von Pigment Yellow 155 in elektrophotographischen Tonern und Entwicklern, und Ink-Jet-Tinten

Die vorliegende Erfindung betrifft einen elektrophotographischen Toner und Entwickler, und Ink-Jet-Tinten auf Basis von C.I. Pigment Yellow 155 als Farbmittel.

Bei elektrophotographischen Aufzeichnungsverfahren wird auf einem Photoleiter ein "latentes Ladungsbild" erzeugt. Dieses "latente Ladungsbild" wird durch Aufbringen eines elektrostatisch geladenen Toners entwickelt, der dann beispielsweise auf Papier, Textilien, Folien oder Kunststoff übertragen und beispielsweise mittels Druck, Strahlung, Hitze oder Lösungsmitteleinwirkung fixiert wird. Typische Toner sind Ein- oder Zweikomponentenpulvertoner (auch Ein- oder Zweikomponenten-Entwickler genannt), darüberhinaus sind noch Spezialtoner, wie z.B. Magnet- oder Flüssigtoner und Polymerisationstoner, im Einsatz.

Ein Maß für die Tonerqualität ist seine spezifische Aufladung q/m (Ladung pro Masseeinheit). Neben Vorzeichen und Höhe der elektrostatischen Aufladung ist vor allem das schnelle Erreichen der gewünschten Ladungshöhe und die Konstanz dieser Ladung über einen längeren Aktivierzeitraum hinweg ein entscheidendes Qualitätskriterium. Darüberhinaus ist die Unempfindlichkeit des Toners gegen Klimaeinflüsse, wie Temperatur und Luftfeuchtigkeit, ein weiteres wichtiges Eignungskriterium.

Sowohl positiv als auch negativ aufladbare Toner finden Verwendung in Fotokopierern, Laserdruckern, LED-(Light emitting diods), LCS-(Liquid crystal shutter)-Druckern oder anderen digitalen Druckern auf elektrophotographischer Basis, in Abhängigkeit vom Verfahrens- und Gerätetyp.

Um elektrophotographische Toner oder Entwickler mit entweder positiver oder negativer Aufladung zu erhalten, werden häufig Ladungssteuermittel zugesetzt. Als farbgebende Komponente werden in Bunttonern typischerweise organische Farbpigmente eingesetzt. Farbpigmente haben gegenüber Farbstoffen wegen ihrer Unlöslichkeit im Anwendungsmedium erhebliche Vorteile, wie z.B. bessere Thermostabilität und Lichtechtheit.

Aufbauend auf dem Prinzip der "subtraktiven Farbmischung" kann mit Hilfe der drei Primärfarben Gelb, Cyan und Magenta das gesamte für das menschliche Auge sichtbare Farbspektrum wiedergegeben werden. Nur wenn die jeweilige Primärfarbe den genau definierten farblichen Anforderungen genügt, ist eine exakte Farbwiedergabe möglich. Andernfalls können einige Farbtöne nicht wiedergegeben werden und der Farbkontrast ist nicht ausreichend.

Bei Vollfarbtonern müssen die drei Toner Gelb, Cyan und Magenta neben den genau definierten farblichen Anforderungen auch hinsichtlich ihrer triboelektrischen Eigenschaften exakt aufeinander abgestimmt sein, da sie nacheinander im gleichen Gerät übertragen werden.

Von Farbmitteln ist bekannt, daß sie die triboelektrische Aufladung von Tonern teilweise nachhaltig beeinflussen können. Wegen der unterschiedlichen triboelektrischen Effekte von Farbmitteln und des daraus resultierenden teilweise sehr ausgeprägten Einflusses auf die Toneraufladbarkeit ist es nicht möglich, die Farbmittel in eine einmal erstellte Tonerbasisrezeptur einfach hinzuzufügen. Vielmehr kann es notwendig werden, für jedes Farbmittel eine eigene Rezeptur zu erstellen, für welche Art und Menge des benötigten Ladungssteuermittels speziell zugeschnitten werden. Dieses Vorgehen ist entsprechend aufwendig und kommt dann bei Farbtonern für Prozeßfarbe noch zusätzlich zu den bereits vorher beschriebenen Schwierigkeiten dazu.

Darüberhinaus ist für die Praxis wichtig, daß die Farbmittel eine hohe Thermostabilität und eine gute Dispergierbarkeit besitzen. Typische Einarbeitungstemperaturen für Farbmittel in die Tonerharze liegen bei Verwendung von Knetern oder Extrudern zwischen 100°C und 200°C. Dementsprechend ist eine Thermostabilität von 200°C, besser 250°C, von großem Vorteil. Wichtig ist auch, daß die Thermostabilität über einen längeren Zeitraum (ca. 30 Minuten) und in verschiedenen Bindemittelsystemen gewährleistet ist. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, die noch weitere Inhaltsstoffe, wie Ladungssteuermittel, Wachse oder Fließhilfsmittel, enthalten können oder im Nachhinein zugesetzt bekommen können.

Grundsätzlich besteht Bedarf an einem Gelb-Pigment, das eine möglichst hohe Transparenz, Grünstichigkeit, gute Dispergierbarkeit und einen möglichst neutralen triboelektrischen Eigeneffekt besitzt.

Unter einem neutralen triboelektrischen Eigeneffekt wird verstanden, daß das Pigment möglichst keine Auswirkung auf die elektrostatische Eigenaufladung des Harzes zeigt.

Die Transparenz ist von zentraler Bedeutung, weil beim Vollfarbkopieren oder Drucken die Farben Gelb, Cyan und Magenta übereinander kopiert oder gedruckt werden, wobei die Reihenfolge der Farben vom Gerät abhängt. Ist nun eine oben liegende Farbe nicht transparent genug, so kann die darunter liegende nicht ausreichend durchscheinen und die Farbwiedergabe ist verzerrt. Beim Kopieren oder Drucken auf Overhead-Folien ist die Transparenz noch bedeutsamer, da hier mangelnde Transparenz auch nur einer Farbe die gesamte Bildprojektion grau erscheinen läßt.

Der vorliegenden Erfindung lag die Aufgabe zugrunde, ein möglichst preisgünstiges, transparentes und grünstichiges Azogelb-Farbmittel mit möglichst neutralen triboelektrischem Eigeneffekt, guter Dispergierbarkeit und hoher Thermostabilität für die Anwendung in elektrophotographischen Tonern und Entwicklern, Ink-Jet-Tinten sowie in Elektretmaterialien zur Verfügung zu stellen, wobei das Farbmittel nicht auf Basis von Dichlorbenzidin sein sollte, und auch keine Halogen-, Nitro-, oder Aminogruppen als Substituenten tragen sollte, um ökotoxikologisch möglichst unbedenklich zu sein. Darüberhinaus sollte das Farbmittel frei von Additiven sein, d.h. aus der farbgebenden Komponente bestehen. Der Zusatz von Additiven ist bei Farbmitteln oft notwendig um optimale coloristische (Farbstärke, Transparenz etc.) und anwendungstechnische (Dispergierbarkeit) Eigenschaften zu erzielen. Für elektrophotographische Toner, insbesondere für Flüssigtoner und Polymerisationstoner, sowie Ink-Jet Tinten sind solche Additive jedoch von Nachteil u.a. wegen ihres elektrostatischen Eigeneffektes und ihre Herauslösbarkeit.

Die Aufgabe wurde überraschenderweise durch nachstehend charakterisiertes Azopigment gelöst. Gegenstand der vorliegenden Erfindung ist die Verwendung eines Azopigmentes der Formel (1) 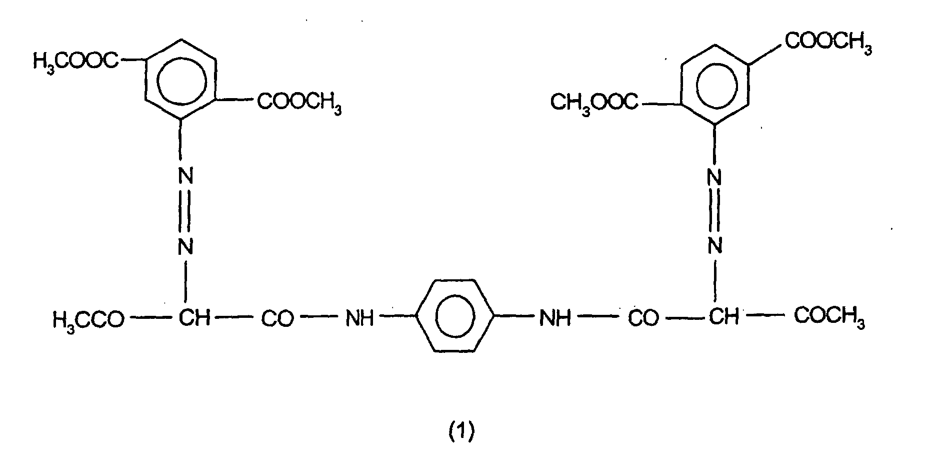 als Farbmittel in elektrophotographischen Tonern und Entwicklern, Elektretmaterialien, sowie in Ink-Jet-Tinten.

Ein Pigment mit den Struktur gemäß Formel (1) ist bereits bekannt und unter der Bezeichnung C.I. Pigment Yellow155 im Handel. Die Herstellung von C.I. Pigment Yellow 155 ist bekannt, und beispielsweise beschrieben in "W. Herbst, K. Hunger "Industrial Organic Pigments", Verlag Chemie Weinheim 1993" sowie der darin zitierten Literatur. Neu und überraschend ist, daß das an sich für Polyester ungeeignete Pigment (W. Herbst, K. Hunger "Industrielle Organische Pigmente", Verlag Chemie, Weinheim 1995, Seite 272) auch in Tonerharzen auf Polyesterbasis sehr gute Eigenschaften, wie sehr gute Dispergierbarkeit und sehr hohe Transparenz, aufweist.
Darüberhinaus zeichnet sich das Pigment überraschenderweise durch einen neutralen elektrostatischen Eigeneffekt aus.
Darüberhinaus ist von großem Vorteil, daß das Pigment eine Thermostabilität von größer als 300°C besitzt.

Herkömmliche Azopigmente besitzen einen deutlichen negativen elektrostatischen Effekt (P. Gregory "High Technology Applications of Organic Colorants", Plenum Press, New York 1991, pp 99-102). In EP-A-0 359 123 wird beschrieben, wie durch Zusatz von geeigneten Ammonium-, Immonium-, Phosphonium-, Arsonium- oder Stiboniumverbindungen der starke negative Triboeffekt teilweise oder ganz aufgehoben werden kann, wobei die genannten Zusätze entweder bei der Kupplungsreaktion, bei der Verlackung oder während des Pigmentfinishs zugegeben werden müssen.

Darüberhinaus wurde beschrieben, daß durch spezielle Masterbatches, d.h. hochkonzentrierte Pigmentvordispersionen in ausgewählten Harzen, der triboelektrische Eigeneffekt von Pigmenten zurückgedrängt werden kann (V. Schlösser et al. Society of Imaging Science and Technology, 11th Congress on Advances in Non-Impact Printing Technologies, Hilton Head, SC, Oct. 29-Nov. 11, 1995, Proceedings pp 110-112). Neben dem zusätzlichen Arbeitsschritt hat diese Methode den Nachteil, daß für jedes Tonerharz ein maßgeschneidertes Masterbatch verwendet werden muß, was sehr aufwendig und kommerziell unrentabel ist.

Verwendet man lediglich das Masterbatch auf Basis des angegebenenen Standardharzes, so wird das Tonersystem durch Fremdharz kontaminiert.

Darüberhinaus kann ein veränderter triboelektrischer Eigeneffekt eines Pigmentes zur Verbesserung der Elektreteigenschaften bei eingefärbten (pigmentierten) Elektretmaterialien führen, wobei typische Elektretmaterialien auf Polyolefinen, halogenierten Polyolefinen, Polyacrylaten, Polyacrylnitrilen, Polystyrolen oder Fluorpolymeren, wie beispielsweise Polyethylen, Polypropylen, Polytetrafluorethylen und perfluoriertes Ethylen und Propylen, oder auf Polyestern, Polycarbonaten, Polyamiden, Polyimiden, Polyetherketonen, auf Polyarylensulfiden, insbesondere Polyphenylensulfiden, auf Polyacetalen, Celluloseestern, Polyalkylenterephthalaten sowie Mischungen daraus basieren. Elektretmaterialien haben zahlreiche Einsatzgebiete und können ihre Ladung durch Corona- oder Triboaufladung erhalten (Lit: G.M. Sessler, "Electrets", Topics in Applied Physics, Vol 33, Springer Verlag, New York, Heidelberg, 2nd Ed., 1987).

Der besondere Vorteil des erfindungsgemäßen C.I. Pigment Yellow 155 zeigt sich vor allem im Vergleich zu C.I. Pigment Yellow 180 der Formel 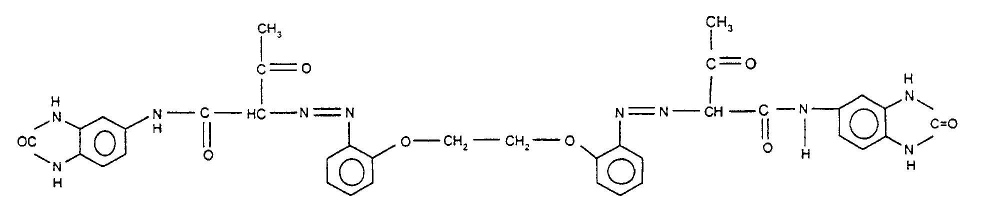 C.I. Pigment Yellow 180 wird in zahlreichen Gelbtonern als Farbmittel eingesetzt und kann dementsprechend für die Tonerindustrie als Standard für Azopigmente angesehen werden, die nicht auf Dichlorbenzidin aufbauen, keine Halogen-, Nitro- oder Aminogruppen tragen und auch keine Schwermetallionen in der Struktur enthalten.

So zeigt C.I. Pigment Yellow 155 z.B. einen ausgeprägten neutralen triboelektrischen Eigeneffekt, während C.I. Pigment Yellow 180 einen erkennbaren triboelektrischen Eigeneffekt zeigt; d.h. ein Toner mit z.B. 5 % P.Y. 155 zeigt elektrostatisch fast die gleiche Aufladbarkeit wie das reine Harzsystem ohne Pigment, wohingegen P.Y. 180 die elektrostatische Aufladbarkeit erkennbar verändert.
Darüberhinaus läßt sich P.Y. 155 je nach Bedarf transparenter oder deckender einstellen.

Zusätzlich kann P.Y. 155 durch Mischung mit anderen Pigmenten koloristisch nuanciert werden.
Häufig stellt sich die Aufgabe, den Farbton in elektrophotographischen Bunttonern, oder in Ink-Jet-Tinten zu nuancieren und den anwendungspezifischen Anforderungen anzupassen. Hierzu bieten sich insbesondere organische Buntpigmente, anorganische Pigmente sowie Farbstoffe an.
Bevorzugt werden organische Buntpigmente in Mischungen mit P.Y. 155 in Konzentrationen zwischen 0.01 und 50 Gew.-%, bevorzugt zwischen 0.1 und 25 Gew.-% und besonders bevorzugt zwischen 0,1 % und 15 Gew.-%, bezogen auf P.Y. 155, zur Nuancierung des Farbtons eingesetzt. Hierbei können die organischen Buntpigmente aus der Gruppe der Azopigmente oder polycyclischen Pigmente sein. In einer besonders bevorzugten Variante kann ein grünstichiges gelbes P.Y. 155 durch rotstichige gelbe Pigment-Typen, wie P.Y. 139, P.Y. 83, P.Y. 181, P.Y. 191, P.Y. 75, P.Y. 180 oder P.Y. 97, im Sinne einer 2- Komponenten-Mischung nuanciert werden. Mischungen mehrerer Komponenten sind ebenfalls geeignet. Größere Farbton-Schritte sind beispielsweise bei Verwendung von Orange-Pigmenten wie P.O. 62, P.O. 36, P.O. 34, P.O. 13, P.O. 43 oder P.O. 5 oder von Rot/Magenta-Pigmenten wie P.R. 122, P.V. 19, P.R. 57, P.R. 48, P.R. 146, P.R. 185 oder P.R. 184 möglich. Eine Feinjustierung des Farbtones von P.Y. 155 ist beispielsweise durch Mischungen mit P.Y. 185 und P.Y. 180 möglich, die aus ökologischen Gesichtspunkten zusätzlich den Vorteil aufweisen, daß alle Komponenten chlorfrei sind.

Die Mischungen können in Form der Pulver, durch Mischen von Preßkuchen, sprühgetrockneten Preßkuchen sowie durch Dispergieren (Extrusion, Kneten, Walzenstuhlverfahren, Perlmühlen, Ultra-Turrax) in Gegenwart eines Trägermaterials in fester oder flüssiger Form (Tinten auf wäßriger und nicht-wäßriger Basis) sowie durch Flushen in Gegenwart eines Trägermaterials hergestellt werden.

Insbesondere zur Steigerung der Brillanz sowie teilweise gleichzeitig nur Nuancierung des Farbtones bieten sich Mischungen mit organischen Farbstoffen an. Als solche sind bevorzugt zu nennen:
wasserlösliche Farbstoffe, wie z.B. Direct, Reactive und Acid Dyes, sowie lösemittellösliche Farbstoffe, wie z.B. Solvent Dyes, Disperse Dyes und Vat Dyes. Als Einzelbeispiele seien genannt: C.I. Reactive Yellow 37, Acid Yellow 23, Reactive Red 23, 180, Acid Red 52, Reactive Blue 19, 21, Acid Blue 9, Direct Blue 199, Solvent Yellow 14, 16, 25, 56, 64, 79, 81, 82, 83:1, 93, 98, 133, 162, 174, Solvent Red 8, 19, 24, 49, 89, 90, 91, 109, 118, 119, 122, 127, 135, 160, 195, 212, 215, Solvent Blue 44, 45, Solvent Orange 60, 63, Disperse Yellow 64, Vat Red 41.

Auch können Farbstoffe und Pigmente mit fluoreszierenden Eigenschaften, wie ®Luminole (Riedel-de Haën), in Konzentrationen von 0,0001 bis 30 Gew.-%, bevorzugt von 0,001 bis 15 Gew.-%, ganz besonders bevorzugt zwischen 0,001 und 5 %, bezogen auf P.Y. 155, eingesetzt werden, beispielsweise um fälschungssichere Toner herzustellen.

Anorganische Pigmente, wie beispielsweise TiO₂ oder BaSO₄, dienen in Mischungen zur Aufhellung. Weiterhin sind Mischungen von P.Y. 155 mit Effekt-Pigmenten, wie beispielsweise Perlglanz-Pigmenten, Fe₂O₃-Pigmenten (®Paliocrome) sowie Pigmenten auf Basis cholesterischer Polymere, geeignet.

Das erfindungsgemäß eingesetzte P.Y. 155 kann auch mit zahlreichen positiv oder negativ steuernden Ladungssteuermitteln, kombiniert werden, um gute anwendungstechnische Aufladbarkeiten zu erzielen.

Als Ladungssteuermittel kommen beispielsweise in Betracht:
Triphenylmethane; Ammonium- und Immoniumverbindungen; Iminiumverbindungen; fluorierte Ammonium- und Immoniumverbindungen; biskationische Säureamide; polymere Ammoniumverbindungen; Diallylammoniumverbindungen; Arylsulfid-Derivate; Phenolderivate; Phosphoniumverbindungen und fluorierte Phosphoniumverbindungen; Calix(n)arene; ringförmig verknüpfte Oligosaccharide (Cyclodextrine) und deren Derivate, insbesondere Borester-Derivate, Interpolyelektrolytkomplexe (IPECs); Polyestersalze; Metallkomplexverbindungen, insbesondere Salicylat-Metall- und Salicylat-Nichtmetallkomplexe, α-Hydroxycarbonsäure-Metall- und -Nichtmetallkomplexe; Benzimidazolone; Azine, Thiazine oder Oxazine, die im Colour Index als Pigments, Solvent Dyes, Basic Dyes oder Acid Dyes aufgeführt sind.

Besonders bevorzugt sind die nachfolgend genannten Ladungssteuermittel, die einzeln oder in Kombination miteinander mit dem erfindungsgemäßen Azopigment kombiniert werden können.
Triarylmethan-Derivate wie beispielsweise:
Colour Index Pigment Blue 1, 1:2, 2, 3, 8, 9, 9:1, 10, 10:1, 11, 12, 14, 18, 19, 24, 53, 56, 57, 58, 59, 61, 62, 67 oder beispielsweise Colour Index Solvent Blue 2, 3, 4, 5, 6, 23, 43, 54, 66, 71, 72, 81, 124, 125, sowie die im Colour Index unter Acid Blue und Basic Dye aufgeführten Triarylmethan-Verbindungen, sofern sie hinsichtlich ihrer Temperaturstabilität und Verarbeitbarkeit geeignet sind, wie beispielsweise Colour Index Basic Blue 1, 2, 5, 7, 8, 11, 15, 18, 20, 23, 26, 36, 55, 56, 77, 81, 83, 88, 89, Colour Index Basic Green 1, 3, 4, 9, 10, wobei sich wiederum Colour Index Solvent Blue 125, 66 und 124 ganz besonders eignen.
Besonders gut geeignet ist Colour Index Solvent Blue 124 in Form seines hochkristallinen Sulfats oder des Trichlor-triphenylmethyltetrachloraluminats.

Ganz besonders bevorzugt sind Metallkomplexe mit den CAS-Nummern 84179-66-8 (Chromazokomplex), 115706-73-5 (Eisenazokomplex), 31714-55-3 (Chromazokomplex), 84030-55-7 (Chromsalicylatkomplex), 42405-40-3 (Chromsalicylatkomplex) sowie die quaternäre Ammoniumverbindung CAS-Nr. 116810-46-9.

Beispiele von für die Herstellung von Elektretfasern gut geeigneten Ladungssteuermitteln der Triphenylmethan-Reihe sind die in der DE-A-1 919 724 und der DE-A-1 644 619 beschriebenen Verbindungen.

Weiterhin geeignet sind Triphenylmethane wie beschrieben in US-A-5 051 585, insbesondere solche der Formel (2) 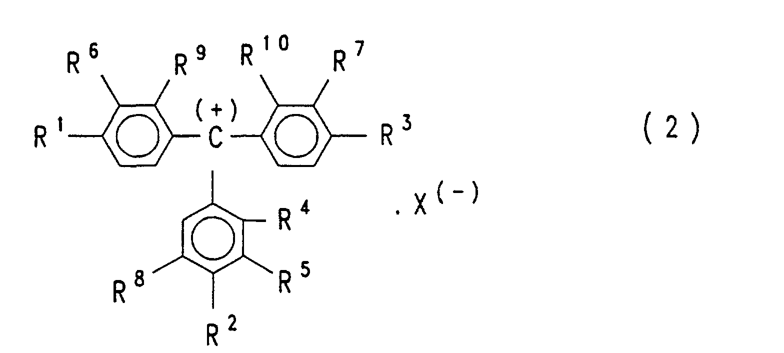 worin
R¹ und R³ gleich oder verschieden sind und -NH₂, eine Mono- und Dialkylaminogruppe, deren Alkylgruppen 1 bis 4, vorzugsweise 1 oder 2, C-Atome haben, eine Mono- oder Di-omega-hydroxyalkylaminogruppe, deren Alkylgruppen 2 bis 4, vorzugsweise 2, C-Atome haben, eine gegebenenfalls N-Alkylsubstituierte Phenyl- oder Phenalkylaminogruppe, deren Alkyl 1 bis 4, vorzugsweise 1 oder 2, C-Atome hat, deren Phenalkylgruppe in der aliphatischen Brücke 1 bis 4, vorzugsweise 1 oder 2, C-Atome, hat und deren Phenylkern einen oder zwei der folgenden Substituenten: Alkyl mit 1 oder 2 C-Atomen, Alkoxy mit 1 oder 2 C-Atomen und die Sulfonsäuregruppe tragen kann, bedeuten,
R² Wasserstoff ist oder eine der für R¹ und R³ genannten Bedeutungen hat,
R⁴ und R⁵ Wasserstoff, Halogen, vorzugsweise Chlor, oder eine Sulfonsäuregruppe bedeutet oder R⁴ mit R⁵ zusammen einen ankondensierten Phenylring bildet,
R⁶, R⁷, R⁹ und R¹⁰ jeweils Wasserstoff oder einen Alkylrest mit 1 oder 2 C-Atomen, vorzugsweise Methyl, bedeuten und
R⁸ Wasserstoff oder Halogen, vorzugsweise Chlor, ist und
X⁻ für ein stöchiometrisches Äquivalent eines Anions steht, insbesondere für ein Chlorid-, Sulfat-, Molybdat-, Phosphormolybdat- oder Borat-Anion.

Besonders bevorzugt ist ein Ladungssteuermittel der Formel (2), worin R¹ und R³ Phenylaminogruppen, R² eine m-Methylphenylaminogruppe und die Reste R⁴ bis R¹⁰ alle Wasserstoff sind.

Weiterhin geeignet sind Ammonium- und Immoniumverbindungen, wie beschrieben in US-A-5 015 676.

Weiterhin geeignet sind fluorierte Ammonium- und Immoniumverbindungen, wie beschrieben in US-A-5 069 994, insbesondere solche der Formel (3) 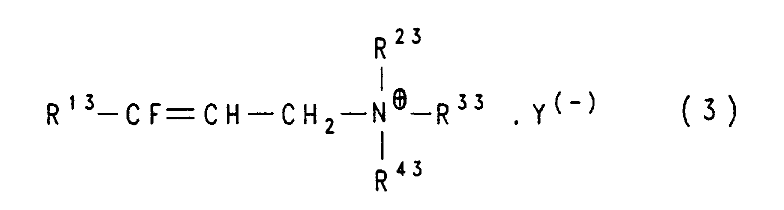 worin
R¹³ perfluoriertes Alkyl mit 5 bis 11 C-Atomen,
R²³, R³³ und R⁴³ gleich oder verschieden sind und Alkyl mit 1 bis 5, vorzugsweise 1 bis 2, C-Atomen bedeuten und
Y⁻ ein stöchiometrisches Äquivalent eines Anions, vorzugsweise eines Tetrafluoroborat- oder Tetraphenylborat-Anions ist.
Vorzugsweise bedeutet
R¹³ perfluoriertes Alkyl mit 5 bis 11 C-Atomen,
R²³ und R³³ Ethyl und
R⁴³ Methyl.

Weiterhin geeignet sind biskationische Säureamide, wie beschrieben in WO 91/10172, insbesondere solche der Formel (4) 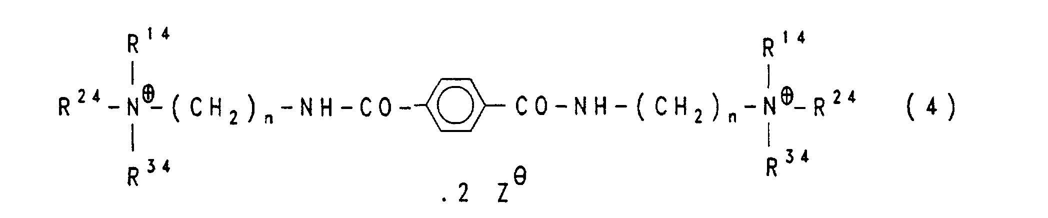 worin
R¹⁴, R²⁴ und R³⁴ gleiche oder verschiedene Alkylreste mit 1 bis 5 C-Atomen, vorzugsweise Methyl, sind,
n für eine ganze Zahl von 2 bis 5 steht, und
Z⁻ für ein stöchiometrisches Äquivalent eines Anions steht, vorzugsweise für ein Tetraphenylborat-Anion.

Weiterhin geeignet sind Diallylammoniumverbindungen, wie beschrieben in DE-A-4 142 541, insbesondere solche der Formel (5) 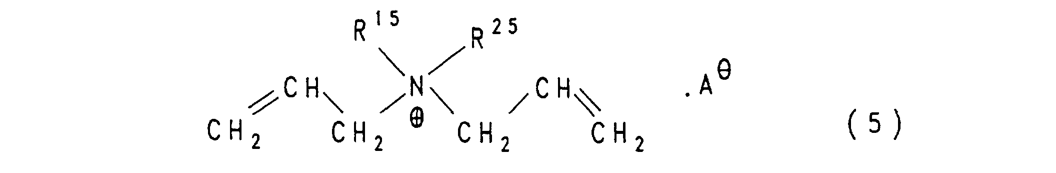 worin
R¹⁵ und R²⁵ gleiche oder verschiedene Alkylgruppen mit 1 bis 5, vorzugsweise 1 oder 2, C-Atomen bedeuten, insbesondere aber für Methylgruppen stehen und A⁻ für ein stöchiometrisches Äquivalent eines Anions steht, vorzugsweise für ein Tetraphenylborat-Anion steht, sowie die aus diesen erhältlichen polymeren Ammoniumverbindungen der Formel (6), wie beschrieben in DE-A-4 029 652 oder DE-A-4 103 610, 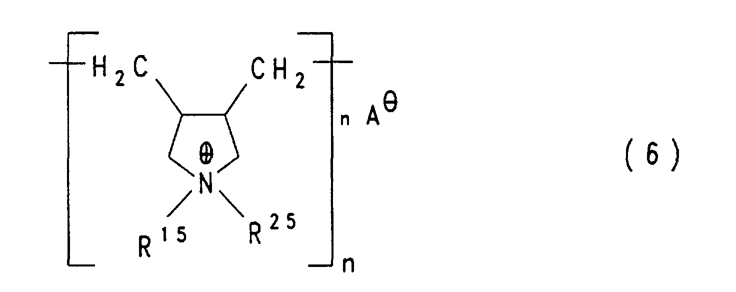 worin n einen Wert hat, der Molekulargewichten von 5000 bis 500000 g/mol entspricht. Besonders bevorzugt sind jedoch Verbindungen der Formel (6) mit Molekulargewichten von 40000 bis 400000 g/mol.

Weiterhin geeignet sind Arylsulfid-Derivate, wie beschrieben in DE-A-4 031 705, insbesondere solche der Formel (7) 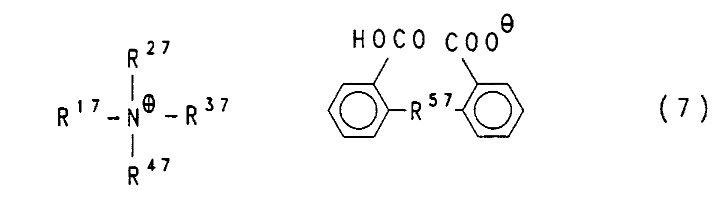 worin
R¹⁷, R²⁷, R³⁷ und R⁴⁷ gleiche oder verschiedene Alkylgruppen mit 1 bis 5, vorzugsweise 2 oder 3, C-Atomen bedeuten, und
R⁵⁷ einer der zweiwertigen Reste -S-, -S-S-, -SO- oder -SO₂- ist. Beispielsweise sind R¹⁷ bis R⁴⁷ Propylgruppen und R⁵⁷ die Gruppe -S-S-.

Weiterhin geeignet sind Phenolderivate, wie beschrieben in EP-A-0 258 651, insbesondere solche der Formel (8) 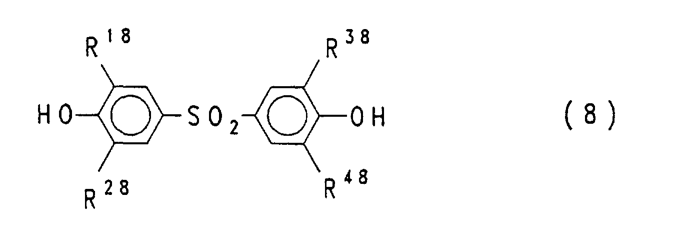 worin
R¹⁸ und R³⁸ Alkyl- oder Alkenylgruppen mit 1 bis 5, vorzugsweise 1 bis 3, C-Atomen, und R²⁸ und R⁴⁸ Wasserstoff oder Alkyl mit 1 bis 3, vorzugsweise Methyl, bedeuten.
Als Beispiele seien die Verbindungen genannt, in denen R¹⁸ bis R⁴⁸ Methylgruppen sind oder in denen R²⁸ und R⁴⁸ Wasserstoff sind und R¹⁸ und R³⁸ für die Gruppe - CH₂-CH=CH₂ stehen.

Weiterhin geeignet sind Phosphoniumverbindungen und fluorierte Phosphoniumverbindungen, wie beschrieben in US-A-5 021 473 und in US-A-5 147 748, insbesondere solche der Formeln (9) 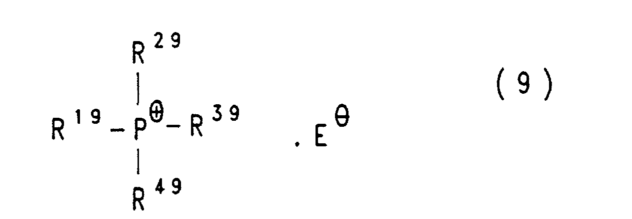 worin
R¹⁹, R²⁹, R³⁹ und R⁴⁹ gleiche oder verschiedene Alkylgruppen mit 1 bis 8, vorzugsweise 3 bis 6, C-Atomen, bedeuten und E^{θ} für ein stöchiometrisches Äquivalent eines Anions steht, vorzugsweise für ein Halogenid-Anion;
und (10) 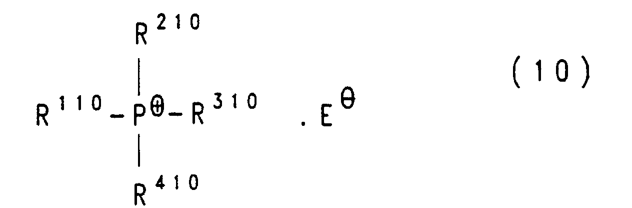
worin
R¹¹⁰ ein hochfluorierter Alkylrest mit 5 bis 15, vorzugsweise 6 bis 10, C-Atomen,
R²¹⁰, R³¹⁰ und R⁴¹⁰ Alkyl mit 3 bis 10 C-Atomen oder Phenyl sind.

Als Beispiel für eine Verbindung der Formel (9) sei genannt Tetrabutylphosphonium-bromid, als Beispiele für Verbindungen der Formel (10) seien genannt die Verbindungen mit R¹¹⁰= C₈F₁₇-CH₂-CH₂-, R²¹⁰=R³¹⁰=R⁴¹⁰= Phenyl und E^{θ} = PF₆ ^{⊖} oder das Tetraphenylborat-Anion.

Weiterhin geeignet sind Calix(n)arene, wie beschrieben in EP-A-0 385 580 und wie beschrieben in EP-A-0 516 434, insbesondere solche der Formel (11a) und (11b) (Angew. Chemie (1993), 195, 1258) 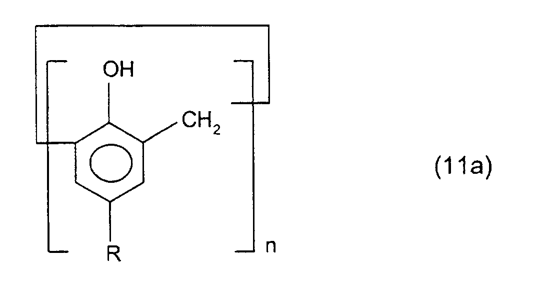 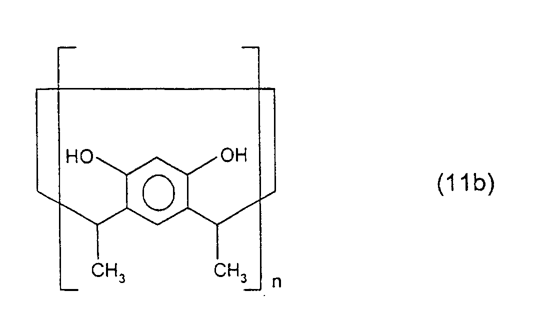 worin
n eine Zahl von 3 bis 12 ist und
R für Wasserstoff, Halogen, vorzugsweise Chlor, geradkettiges oder verzweigtes Alkyl mit 1 bis 12 C-Atomen, Aralkyl, z.B. Benzyl oder Phenethyl,
-NO₂, -NH₂ oder NHR¹¹¹ steht, wobei R¹¹¹ Alkyl mit 1 bis 8 C-Atomen,
gegebenenfalls C₁-C₄-alkylsubstituiertes Phenyl oder -Si(CH₃)₃ bedeutet.

Weiterhin geeignet sind Metallkomplexverbindungen, wie Chrom-, Kobalt-, Eisen-, Zink- oder Aluminium-Azokomplexe oder Chrom-, Kobalt-, Eisen-, Zink- oder Aluminium-Salicyl- oder Borsäurekomplexe der Formeln (12), (13) und (14) 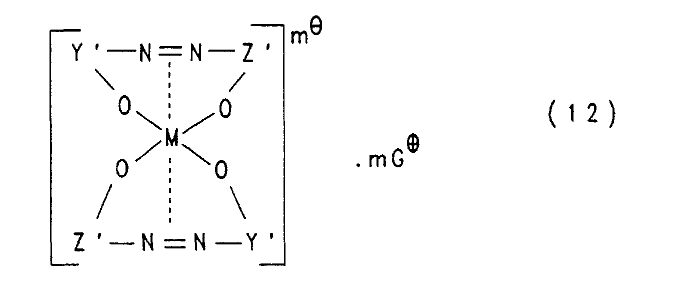 worin
M ein 2-oder 3-wertiges Metallatom, vorzugsweise Chrom, Kobalt, Eisen, Zink oder Aluminium bedeutet, oder auch ein Nichtmetall wie Bor oder Si,
Y' und Z' für zweibindige aromatische Ringe, vorzugsweise der Formeln 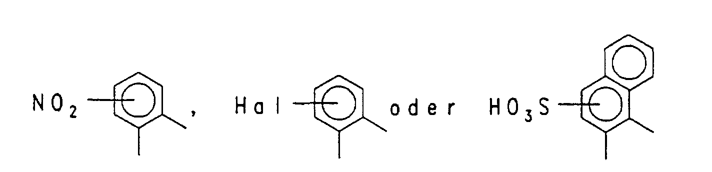
stehen, und m eine der Zahlen 1 oder 2 ist; 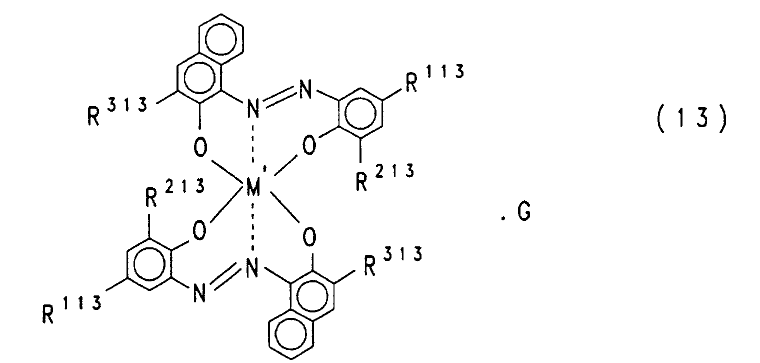 worin
M' ein 2- oder 3-wertiges Metallatom, vorzugsweise Chrom, Kobalt, Eisen,
R¹¹³ Wasserstoff, Halogen, vorzugsweise Cl, Nitro oder Amidosulfonyl,
R²¹³ Wasserstoff oder Nitro,
R³¹³ Wasserstoff, die Sulfonsäuregruppe, -CO-NH-R⁴¹³ ist, wobei R⁴¹³ Phenyl, Alkyl mit 1 bis 5 C-Atomen, das gegebenenfalls durch eine Mono-, Di- oder Trialkylaminogruppe substituiert ist, bedeutet und
G in Formel (12) und (13) jeweils ein Gegenion ist, das die Neutralität des Komplexes herstellt, vorzugsweise ein oder mehrere Protonen, ein oder mehrere Alkali- oder Ammonium-Ionen; 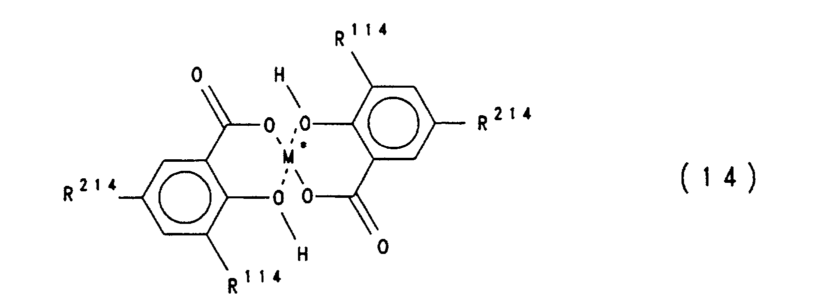
worin
M^{*} ein zweiwertiges Metall-Zentralatom, vorzugsweise ein Zinkatom,
R¹¹⁴ und R²¹⁴ gleiche oder verschiedene, geradkettige oder verzweigte Alkylgruppen mit 1 bis 8, vorzugsweise 3 bis 6, C-Atomen, beispielsweise tert. Butyl, bedeuten.

Derartige Verbindungen sind charakterisiert durch die CAS-Nummern 31714-55-3, 104815-18-1, 84179-68-8, 110941-75-8, 32517-36-5, 38833-00-00, 95 692-86-7, 85414-43-3, 136709-14-3, 135534-82-6, 135534-81-5, 127800-82-2, 114803-10-0, 114803-08-6.

Beispiele für besonders bevorzugte Metallkomplexverbindungen der Formel (13) sind in der nachfolgenden Tabelle 1 angegeben:

**Tabelle 1**

| R¹¹³ | R²¹³ | R³¹³ | R⁴¹³ | M' | G |
|---|---|---|---|---|---|
| Cl | H | H | - | Cr | H⁺ |
| NO₂ | NO₂ | -CONHR⁴¹³ | Phenyl | Cr | H⁺/Na⁺/NH₄⁺ |
| Cl | H | -CONHR⁴¹³ | Phenyl | Fe | H⁺/Na⁺/NH₄⁺ |
| Cl | H | -CONHR⁴¹³ | -(CH₂)₃--N⁺(CH₃)₃ | Cr | Cl⁻ |
| -SO₂NH₂ | H | H | - | Co | H⁺/Na⁺/NH₄⁺ |

Weiterhin geeignet sind Benzimidazolone, wie beschrieben in EP-A-0 347 695, insbesondere solche der Formel (15) 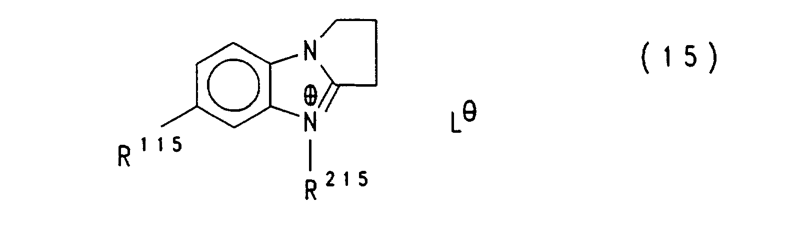 worin
R¹¹⁵ ist ein Alkyl mit 1 bis 5 C-Atomen und R²¹⁵ ein Alkyl mit 1 bis 12
C-Atomen und L ein stöchiometrisches Äquivalent eines Anions, insbesondere ein Chlorid- oder Tetrafluoborat-Anion.

Als Beispiel sei die Verbindung mit R¹¹⁵= CH₃ und R²¹⁵ = C₁₁H₂₃ genannt.

Weiterhin geeignet sind ringförmig verknüpfte Oligosaccharide, wie beschrieben in DE-A-4 418 842, insbesondere solche der Formel (16) 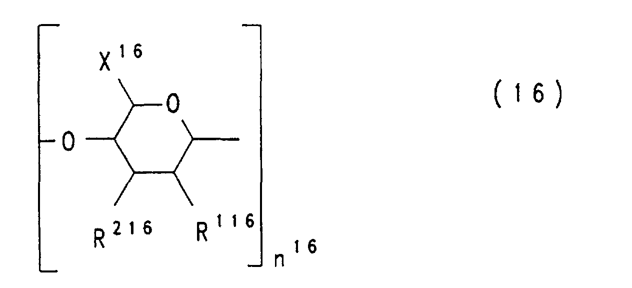 worin n¹⁶ eine Zahl zwischen 3 und 100 ist, R¹¹⁶ und R²¹⁶ die Bedeutung OH, OR³¹⁶, wobei R³¹⁶ substituiertes oder unsubstituiertes Alkyl-(C₁-C₁₈), Aryl-(C₆-C₁₂) oder Tosyl bedeuten, und X¹⁶ die Bedeutung CH₂OH oder CH₂COR³¹⁶ hat. Als Beispiele seien genannt:
n¹⁶ = 6, R¹¹⁶ und R²¹⁶ = OH, X¹⁶ = CH₂OH
n¹⁶ = 7, R¹¹⁶ und R²¹⁶ = OH, X¹⁶ = CH₂OH
n¹⁶ = 8, R¹¹⁶ und R²¹⁶ = OH, X¹⁶ = CH₂OH.

Weiterhin geeignet sind Polymersalze, wie beschrieben in DE-A-4 332 170, deren anionische Komponente ein Polyester ist, der aus dem Reaktionsprodukt der einzelnen Komponenten a), b) und c) sowie gegebenenfalls d) und gegebenenfalls e) besteht, wobei
a) eine Dicarbonsäure oder ein reaktives Derivat einer Dicarbonsäure, welche frei von Sulfogruppen sind,
b) eine difunktionelle aromatische, aliphatische oder cycloaliphatische Sulfoverbindung, deren funktionelle Gruppen Hydroxyl oder Carboxyl, oder Hydroxyl und Carboxyl, sind,
c) ein aliphatisches, cycloaliphatisches oder aromatisches Diol, ein Polyetherdiol oder ein Polycarbonatdiol,
d) eine polyfunktionelle Verbindung (Funktionalität > 2), deren funktionelle Gruppen Hydroxyl oder Carboxyl, oder Hydroxyl und Carboxyl, sind und
e) eine Monocarbonsäure ist
und deren kationische Komponente Wasserstoffatome oder Metallkationen sind.

Weiterhin geeignet sind Cyclooligosaccharid-Verbindungen, wie sie beispielsweise in der DE-A-1 971 1260 beschrieben sind, die durch Umsetzung eines Cyclodextrins oder Cyclodextrin-Derivates mit einer Verbindung der Formel 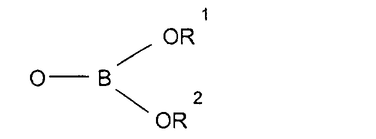 erhältlich sind, worin R¹ und R² Alkyl, bevorzugt C₁-C₄-Alkyl, bedeuten.

Weiterhin geeignet sind Inter-Polyelektrolyt-Komplexe, wie sie beispielsweise in der DE-A-197 32 995 beschrieben sind.

Geeignet sind Interpolyelektrolyt-Komplexe, die aus einer oder mehreren Polyanionen-bildenden Verbindung(en) und aus einer oder mehreren Polykationenbildenden Verbindung(en) bestehen. Besonders geeignet sind hierbei Verbindungen, die ein Molverhältnis von polymeren kationischen zu polymeren anionischen Gruppen von 0,9:1,1 bis 1,1:0,9 haben.

Weiterhin geeignet, insbesondere bei Anwendung von P.Y. 155 in Flüssigtonern (Handbook of Imaging Materials, 1991, Marcel Dekker, Inc. Kap. 6 Liquid Toner Technology), sind oberflächenaktive, ionische Verbindungen und sogenannte Metallseifen.

Besonders geeignet sind alkylierte Arylsulfonate, wie Bariumpetronate, Calciumpetronate, Bariumdinonylnaphthalensulfonate (basisch und neutral), Calciumdinonylsulfonat oder Dodecylbenzolsulfonsäure-Na-salz und Polyisobutylensuccinimide (Chevrons Oloa 1200).
Weiterhin geeignet sind Soyalecithin und N-Vinylpyrrolidon-Polymere. Weiterhin geeignet sind Natriumsalze von phosphatierten Mono- und Diglyceriden mit gesättigten und ungesättigten Substituenten, AB- Diblockcopolymere von A: Polymere von 2-(N;N)di-methylaminoethyl-methacrylat quarternisiert mit Methyl-p-toluolsulfonat, und B: Poly-2-ethylhexylmethacrylat.
Weiterhin geeignet, insbesondere in Flüssigtonern, sind di- und trivalente Carboxylate, insbesondere Aluminium-tristearat, Bariumstearat, Chromstearat, Magnesiumoktat, Calziumstearat, Eisennaphthalit und Zinknaphthalit.

Weiterhin sind geeignet chelatisierende Ladungssteuermittel, wie in EP 0 636 945 A1 beschrieben.

Weiterhin geeignet sind metallische (ionische) Verbindungen, wie in EP 0 778 501 A1 beschrieben.

Weiterhin geeignet sind Phosphat-Metallsalze wie in JA 9 (1997)-106107 beschrieben.

Weiterhin geeignet sind Azine der folgenden Colour-Index-Nummern: C.I. Solvent Black 5, 5:1, 5:2, 7, 31 und 50; C.I. Pigment Black 1, C.I. Basic Red 2 und C.I. Basic Black 1 und 2.

Grundsätzlich ist C.I. Pigment Yellow 155 für Kombinationen mit positiven und negativen Ladungssteuermitteln (CCA) geeignet. Zweckmäßig sind dabei Pigmentkonzentrationen von 0,01 bis 20 Gew.-%, vorzugsweise 0,1 bis 5 Gew.-%, an Ladungssteuermittel, bezogen auf das Gesamtgewicht des elektrophotographischen Toners oder Entwicklers, um die gewünschte Polarität einzustellen. Ein besonderer Vorteil hierbei ist das schnelle Erreichen des Aufladungsspitzenwertes und dessen gute Konstanz.

Die Kombination von Pigment und Ladungssteuermittel kann nachträglich durch physikalisches Mischen während der Pigmentsynthese, während des Finishvorganges oder durch entsprechendes Aufziehen auf die Pigmentoberfläche (Pigmentcoating) erfolgen.

Gegenstand der Erfindung ist daher auch ein elektrophotographischer Toner oder Entwickler, enthaltend ein übliches Tonerbindemittel, 0,1 bis 60 Gew.-%, vorzugsweise 0,5 bis 20 Gew.-%, an ggf. nuanciertem C.I. Pigment Yellow 155, und 0 bis 20 Gew.-%, vorzugsweise 0,1 bis 5 Gew.-%, jeweils bezogen auf das Gesamtgewicht des Toners oder Entwicklers, eines Ladungssteuermittels aus der Klasse der Triphenylmethane, Ammonium- und Immoniumverbindungen; fluorierten Ammonium- und Immoniumverbindungen; biskationischen Säureamide; polymeren Ammoniumverbindungen; Diallylammoniumverbindungen; Arylsulfid-Derivate; Phenolderivate; Phosphoniumverbindungen und fluorierten Phosphoniumverbindungen; Calix(n)arene; Cyclodextrine; Polyestersalze; Metallkomplexverbindungen; Cyclooligosaccharid-Borkomplexe, Inter-Polyelektrolyt-Komplexe; Benzimidazolone; Azine, Thiazine oder Oxazine.

Besonders bevorzugt sind elektrophotographische Toner oder Entwickler, die als Ladungssteuermittel eine Verbindung der Formel (17) 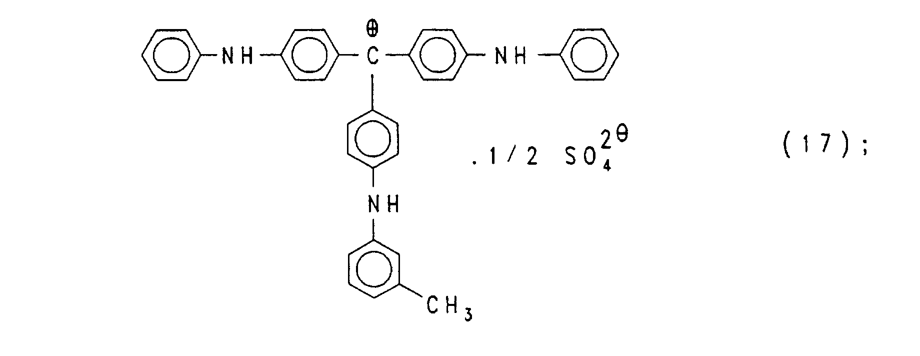
oder eine Verbindung der vorstehend genannten Formel (3);
oder eine Verbindung der vorstehend genannten Formel (5), worin R¹⁵ und R²⁵ jeweils Methyl und A^{θ} ein Tetraphenylborat-Anion ist;
oder eine Verbindung der vorstehend genannten Formel (6), worin R¹⁵ und R²⁵ jeweils Methyl, A^{θ} ein Tetraphenylborat-Anion ist und n einen Wert hat, der Molekulargewichten von 5000 bis 500 000 g/mol entspricht;
oder eine Verbindung der vorstehend genannten Formel (7);
oder eine Verbindung der vorstehend genannten Formel (13), worin R¹¹³ Chlor, R²¹³ und R³¹³ Wasserstoff, M' Chrom, Kobalt oder Eisen und G ein oder zwei Protonen ist;
oder ein vorstehend genanntes Polymersalz, dessen anionische Komponente ein Polyester ist, enthalten.

Das erfindungsgemäß verwendete Pigment wird zweckmäßigerweise in einer Konzentration von 0,1 bis 60 Gew.-%, vorzugsweise von 0,5 bis 20 Gew.-%, besonders bevorzugt von 0,1 bis 5,0 Gew.-%, bezogen auf die Gesamtmischung, in das Bindemittel des jeweiligen Toners (flüssig oder trocken), Entwicklers, Elektretmaterials homogen, beispielsweise durch Extrudieren oder Einkneten, eingearbeitet. Dabei können das erfindungsgemäß eingesetzte Pigment als auch die vorstehend erwähnten Ladungssteuermittel als getrocknete und gemahlene Pulver, Dispersionen oder Suspensionen, z.B. in organischen und/oder anorganischen Lösungsmitteln, Preßkuchen (der z.B. zum sogenannten Flush-Verfahren eingesetzt werden kann), sprühgetrocknete Preßkuchen, wie nachstehend beschrieben, Masterbatch, Präparation, angeteigte Paste, als auf geeignete Träger, wie z.B. Kieselgur, TiO₂, Al₂O₃, aus wäßriger oder nicht-wäßriger Lösung aufgezogene Verbindung oder in sonstiger Form zugegeben werden. Der Pigmentgehalt im Preßkuchen und Masterbatch beträgt üblicherweise zwischen 5 und 70 Gew.-%, vorzugsweise zwischen 20 und 50 Gew.-%. Darüberhinaus kann das erfindungsgemäß verwendete Pigment auch als hochkonzentrierter, insbesondere als sprühgetrockneter Preßkuchen eingesetzt werden, wobei hier der Pigmentgehalt zwischen 25 und 95 Gew.-%, bevorzugt zwischen 50 und 90 Gew.-%, liegt. Die Herstellung des sprühgetrockneten Preßkuchens kann nach üblichen Methoden erfolgen.Beispielsweise wird eine wäßrige, wäßrig-organische oder organische Suspension des Pigments in einer geeigneten Apparatur bei üblichen Lufteingangstemperaturen, vorzugsweise zwischen 100 und 400°C, und üblichen Luftaustrittstemperaturen, vorzugsweise zwischen 50 und 200°C, sprühgetrocknet.

Geeignete Sprühtrocknungsapparaturen sind beispielsweise Gleichstrom-Trockner mit Zentrifugalzerstäubung, Luftbesen, Gegen-/Gleichstrom-Trockner mit Zweistoffdüsen-Zerstäubung sowie auch Zweipunktaustragung des Trockenproduktes, Gegen-/Gleichstrom-Trockner mit Druckdüsenzerstäubung und Zweipunktaustragung sowie Geräte, die auf Gleichstromtrocknung und Zweidüsen-Zerstäubung basieren.

Der sprühgetrocknete Preßkuchen von Pigment Yellow 155 ist besonders staubarm, gut rieselfähig, leicht dispergierbar und gut dosierbar.

Ebenso kann das erfindungsgemäß verwendete Pigment grundsätzlich auch schon bei der Herstellung der jeweiligen Bindemittel zugegeben werden, d.h. im Verlauf von deren Polymerisation, Polyaddition oder Polykondensation.

Die Höhe der elektrostatischen Aufladung der elektrophotographischen Toner in welche das erfindungsgemäße Pigment homogen eingearbeitet wird, kann nicht vorhergesagt werden und wird an Standardtestsystemen unter gleichen Bedingungen (gleiche Dispergierzeiten, gleiche Teilchengrößenverteilung, gleiche Teilchenform) bei etwa 20°C und 50 % relativer Luftfeuchte gemessen. Die elektrostatische Aufladung des Toners erfolgt durch Verwirbelung mit einem Carrier, d.h. einem standardisierten Reibungspartner (3 Gewichtsteile Toner auf 97 Gewichtsteile Carrier), auf einer Rollbank (150 Umdrehungen pro Minute). Anschließend wird an einem üblichen q/m-Meßstand die elektrostatische Aufladung gemessen (J.H. Dessauer, H.E. Clark, "Xerography and related Processes", Focal Press, N.Y., 1965, Seite 289; J.F. Hughes, "Electrostatic Powder Coating", Research Studies Press Ltd. Letchworth, Hertfordshire, England, 1984, Chapter 2). Bei der Bestimmung des q/m-Wertes oder der Triboaufladung von Pulverlacken ist die Teilchengröße von großem Einfluß, weshalb bei den durch Sichtung erhaltenen Toner proben streng auf einheitliche Teilchengrößenverteilung geachtet wird. So wird für Toner eine mittlere Teilchengröße von 10 µm angestrebt, während für Pulverlacke eine mittlere Teilchengröße von 50 µm praktikabel ist.

Die Transparenz des erfindungsgemäßen Azopigments in Tonerbindemittelsystemen wird wie folgt untersucht: In 70 Gew.-Teile eines Rohfirnis (bestehend aus 15 Gew.-Teilen des jeweiligen Tonerharzes und 85 Gew.-Teilen Ethylacetat) werden 30 Gew.-Teile des pigmentierten Testtoners (Herstellung siehe Beispiel 1.4.1) mit einem Dissolver eingerührt (5 min bei 5000 upm).
Der so erzeugte Testtonerfirnis wird gegen einen gleichermaßen erzeugten Standardpigmentfirnis mit einem Handcoater auf geeignetes Papier (z.B. Buchdruckpapier) aufgerakelt. Eine geeignete Rakelgröße ist z.B. K bar N 3 (= 24 µm Rakelschichtdicke). Das Papier hat zur besseren Bestimmung der Transparenz einen schwarzen Balken aufgedruckt, die Transparenzunterschiede in dL-Werten werden nach DIN 55 988 bestimmt, bzw. nach der Prüfvorschrift Marketing Pigmente, Hoechst AG "Visuelle und Farbmetrische Bewertung" vom 13.09.1990 (Nr. 1/1) bewertet.

Der bei der Pigmentcharakterisierung angegebene Restsalzgehalt beschreibt die spezifische Leitfähigkeit des Extraktes einer wäßrigen Pigmentsuspension (Gemäß Prüfvorschrift Marketing Pigmente, Hoechst AG Nr. 1/10 (2/91) "Bestimmung der spezifischen Leitfähigkeit am Extrakt einer wäßrigen Pigmentsuspension"), der entsprechend angegebene pH-Wert wird nach der Prüfvorschrift Marketing Pigmente, Hoechst AG, 1/9 (2/91) "Bestimmung des pH-Wertes am Extrakt einer wäßrigen Pigmentsuspension" bestimmt, wobei bei beiden Bestimmungsmethoden bidestilliertes Wasser anstelle des in der Prüfvorschrift genannten E-Wasser (= entionisiertes Wasser) verwendet wird.

Weiterhin wurde gefunden, daß C.I. Pigment Yellow 155 als Farbmittel in Ink-Jet Tinten auf wäßriger und nicht wäßriger Basis, insbesondere in solchen Tinten, die nach dem Hot-melt-Verfahren arbeiten, geeignet ist. Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Gegenstand der Erfindung ist auch eine Hot-Melt Ink-Jet-Tinte, bestehend aus 20 bis 90 Gew.-% Wachs, 1 bis 10 Gew.-% C.I. Pigment Yellow 155 und 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans. Typische Zusatzstoffe und Hilfsmittel sind z.B. in US-PS 5,560,770 beschrieben.

Gegenstand der Erfindung sind auch Ink-Jet-Tinten auf wäßriger Basis (Mikroemulsionstinten), enthaltend 0,5 bis 30 Gew.-%, vorzugsweise 1,5 bis 20 Gew.-%, C.I. Pigment Yellow 155, 5 bis 99 Gew.-% Wasser und 0,5 bis 94,5 Gew.-% organisches Lösungsmittel und/oder hydrotrope Verbindung.

Gegenstand der Erfindung sind auch "Solvent based" Ink-Jet-Tinten, enthaltend 0,5 bis 30 Gew.-%, vorzugsweise 1,5 bis 20 Gew.-%, C.I. Pigment Yellow 155, 85 bis 94,5 Gew.-% organisches Lösungsmittel und/oder hydrotrope Verbindungen.

Zur Herstellung der Ink-Jet-Tinten benutztes Wasser wird vorzugsweise in Form von destilliertem oder entsalztem Wasser eingesetzt.

Bei den in den Ink-Jet-Tinten enthaltenen Lösungsmitteln kann es sich um ein organisches Lösungsmittel oder um ein Gemisch derartiger Lösungsmittel handeln. Geeignete Lösungsmittel sind beispielsweise ein- oder mehrwertige Alkohole, deren Ether und Ester, z.B. Alkanole, insbesondere mit 1 bis 4 C-Atomen, wie z.B. Methanol, Ethanol, Propanol, Isopropanol, Butanol, Isobutanol; zwei- oder dreiwertige Alkohole, insbesondere mit 2 bis 5 C-Atomen, z.B. Ethylenglykol, Propylenglykol, 1,3-Propandiol, 1,4-Butandiol, 1,5-Pentandiol, 1,6-Hexandiol, 1,2,6-Hexantriol, Glycerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykolmono-methyl-, -ethyl- oder -butylether, Triethylenglykol-mono-methyl- oder -ethyl-ether; Ketone und Ketonalkohole wie z.B. Aceton, Methylethylketon, Diethylketon, Methylisobutylketon, Methylpentylketon, Cyclopentanon, Cyclohexanon, Diacetonalkohol; Amide, wie z.B. Dimethylformamid, Dimethylacetamid, N-Methylpyrrolidon, Toluol und n-Hexan.

Als hydrotrope Verbindungen, die gegebenenfalls auch als Lösungsmittel dienen, können beispielsweise Formamid, Harnstoff, Tetramethylharnstoff, ε-Caprolactam, Ethylenglykol, Diethylenglykol, Triethylenglykol, Polyethylenglykol, Butylglykol, Methylcellosolve, Glycerin, N-Methylpyrrolidon, 1,3-Diethyl-2-imidazolidinon, Thiodiglykol, Natrium-Benzolsulfonat, Na-Xylolsulfonat, Na-Toluolsulfonat, Natrium-Cumolsulfonat, Na-Dodecylsulfonat, Na-Benzoat, Na-Salicylat oder Natrium-Butylmonoglykolsulfat eingesetzt werden.

Weiterhin können die erfindungsgemäßen Ink-Jet-Tinten noch übliche Zusatzstoffe enthalten, beispielsweise Konservierungsmittel, kationische, anionische oder nichtionogene oberflächenaktive Substanzen (Tenside und Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit.

Amine, wie z.B. Ethanolamin, Diethanolamin, Triethanolamin, N,N-Dimethylethanolamin oder Diisopropylamin, dienen hauptsächlich zur Erhöhung des pH-Wertes der Aufzeichnungsflüssigkeit. Sie sind normalerweise zu 0 bis 10 Gew.-%, vorzugsweise 0,5 bis 5 Gew.-% in der Aufzeichnungsflüssigkeit vorhanden.

Die erfindungsgemäßen Ink-Jet-Tinten können hergestellt werden, indem ggf. nuanciertes C.I. Pigment Yellow 155 als Pulver, als Pigmentpräparation, als Suspension oder als Preßkuchen in das wäßrige oder nicht-wäßrige Medium der Ink-Jet-Tinte eindispergiert wird. Der Preßkuchen kann auch ein hochkonzentrierter, insbesondere sprühgetrockneter, Preßkuchen, wie vorstehend beschrieben sein.

In den nachfolgenden Beispielen bedeuten Teile Gewichtsteile und Prozent Gewichtsprozent.

### Beispiel 1

### 1.1 Synthese

a) Diazokomponente
   In eine Mischung von 200 Teilen Wasser und 70 Teilen HCl (31%ig) werden unter Rühren 41,8 Teile Aminoterephthalsäuredimethylester eingetragen und mehrere Stunden gerührt.
   Bei 10 bis 15°C wird durch Zugabe von 35 Teilen NaNO₂-Lösung (40 %ig) diazotiert und 1 bis 1,5 Std. gerührt. Der Nitritüberschuß wird mit Amidosulfonsäure zerstört. Mit Natriumacetatlösung (4N) wird anschließend unter Eiskühlung auf pH 4,5 gestellt.
b) Kupplungskomponente
   Zu 450 Teilen Wasser fügt man 430 Teile NaOH (33 %ig) hinzu und löst unter Rühren 27,6 Teile 1,4-Bis-(acetoacetylamino)-benzol. Es werden 170 Teile Eis zugegeben und anschließend wird unter Rühren mit 263 Teilen Eisessig die Kupplungskomponente gefällt.
c) Kupplung
   Die Kupplungssuspension (b) wird in 40 Minuten unter Rühren zur Diazokomponente (a) zudosiert. Es wird ca. 2 Stunden nachgerührt und eventueller Diazoüberschuß durch Zugabe weiterer Kupplungskomponente gekuppelt.
d) Anschließend wird der Ansatz durch Einleiten vom Wasserdampf auf 98°C aufgeheizt, 1 Stunde bei 98°C gerührt und heiß abgesaugt. Das Produkt wird salzfrei gewaschen und bei 80°C im Vakuum getrocknet.

Die erhaltenen 68 Teile des grünstichigen Gelbpigmentes P.Y. 155 werden über eine Stiftmühle gemahlen.

### 1.2 Pigmentcharakteristik

BET-Oberfläche: 39,8 m²/g
Restfeuche (Ausheizbirne): 0,65 %
Restsalzgehalt: 90 µS/cm
pH: 6,5

Thermostabilität: Eine DTA (Differentialthermoanalyse), 3°C/min Aufheizrate, geschlossene Glasampulle, zeigt eine Thermostabilität von deutlich größer als 300°C (Beginnende Zersetzung ab 310°C).

Teilchengröße und -form (elektronenmikroskopisch ausgezählte Massenverteilung): Teilchengröße und Teilchenform werden durch elektronenmikroskopische Aufnahme des Pigmentpulvers bestimmt. Hierzu wird das Pigment 15 min in Wasser dispergiert und anschließend aufgesprüht. Die Aufnahmen erfolgen bei 13000-facher und 29000-facher Vergrößerung.

### Teilchengröße:

d₂₅: 50 nm d₅₀: 65 nm d₉₅: 83 nm
Röntgenbeugungsdiagramm (CuK_{α}-Strahlung):
2 Theta (s= stark, m= mittel, w= schwach):

| 2 Theta | Intensität (relative Intensität) | | Halbwertsbreite (2 Theta) |
|---|---|---|---|
| 3,8 | w | (10 %) | 1,2 |
| 9,9 | s | (53 %) | 1,5 |
| 16,6 | m | (13 %) | 2,3 |
| 20,4 | m | (14 %) | 2,0 |
| 26,4 | s | (100 %) | 1,5 |

### Dielektrische Kenndaten

| | |
|---|---|
| ε (1 kHz) | 5,1 |
| tanδ (1 kHz) | 2·10⁻² |
| Ω·cm | 1 ·10¹⁶ |

### 1.3 Transparenz

In einem Tonerharz (Polyester auf Bisphenol-A-Basis) wurde eine verbesserte Transparenz gemessen (24 µm Schichtdicke), wobei der pigmentierte Testtoner wie in Beispiel 1.4.1 hergestellt wurde.

Gegenüber dem im Vergleichsbeispiel 2 angegebenen Standard wird bei ca. 50 %-iger Farbstärke eine um 4-5 Bewertungseinheiten erhöhte Transparenz gefunden.

Bewertung der Transparenzunterschiede nach Prüfvorschrift 1/1: 1 ≙ Spur, 2 ≙ etwas; 3 ≙ merklich; 4 ≙ deutlich; 5 ≙ wesentlich; 6 ≙ bedeutend transparenter.

### 1.4 Elektrostatische Eigenschaften

### 1.4.1 Toner

5 Teile des Pigmentes aus Beispiel 1.1 werden mittels eines Kneters innerhalb von 30 Min. in 95 Teile eines Tonerbindemittels (Polyester auf Bisphenol-A-Basis, ®Almacryl T500) homogen eingearbeitet. Anschließend wird auf einer Labor-Universalmühle gemahlen und dann auf einem Zentrifugalsichter klassifiziert. Die gewünschte Teilchenfraktion (4 bis 25 µm) wird mit einem Carrier aktiviert, der aus mit Silikon beschichteten Ferrit-Teilchen der Größe 50 bis 200 µm (Schüttdichte 2,75 g/cm³) besteht (FBM 96-100; Fa. Powder Techn.).

Die Messung erfolgt an einem üblichen q/m-Meßstand. Durch Verwendung eines Siebes mit einer Maschenweite von 25 µm wird sichergestellt, daß bei den Tonerausblasungen kein Carrier mitgerissen wird. Die Messungen erfolgen bei ca. 50 %iger relativer Luftfeuchte. In Abhängigkeit von der Aktivierdauer werden folgende q/m-Werte [µC/g] gemessen:

| Aktivierdauer | Aufladung q/m [µC/g] |
|---|---|
| 5 Min. | -14 |
| 10 Min. | -14 |
| 30 Min. | -12 |
| 2 Std. | -9 |
| 24 Std. | -7 |

### 1.4.4 Toner

5 Teile des Pigmentes aus Beispiel 1.1 werden wie in Beispiel 1.4.1 in ein Tonerharz eingearbeitet und vermessen, wobei jedoch an Stelle des Polyesterharzes ein Styrol-Acrylat-Copolymer 60:40 (®Dialec S309, Fa. Diamond Shamrock) als Tonerbindemittel, und als Carrier mit Styrol-Methacryl-Copolymerisat (90:10) beschichtete Magnetitteilchen der Größe 50 - 200 µm (90 µm Xerographic Carrier, Plasma Materials Inc., NH, USA) eingesetzt werden.

In Abhängigkeit von der Aktivierdauer werden folgende q/m-Werte gemessen:

| Aktivierdauer | q/m [µC/g] |
|---|---|
| 5 Min | -7 |
| 10 Min | -8 |
| 30 Min | -14 |
| 2 Std. | -18 |
| 24 Std. | -21 |

### 1.4.5 Toner

5 Teile des Pigmentes aus Beispiel 1.1 und 1 Teil des in DE-A-4 031 705, Beispiel 5 beschriebenen Ladungssteuermittels der Formel 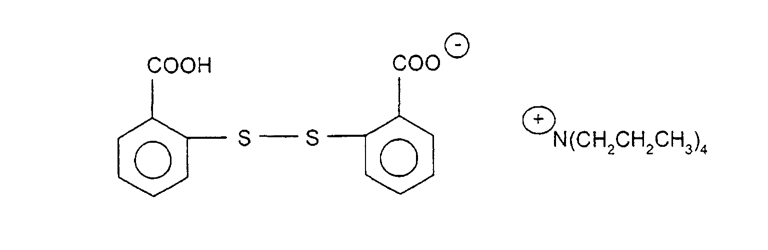 werden, wie in Beispiel 1.4.4 beschrieben, in ein Styrol-Acrylat-Tonerbindemittel eingearbeitet und vermessen.
In Abhängigkeit von der Aktivierdauer werden folgende q/m-Werte gemessen:

| Aktivierdauer | q/m [µC/g] |
|---|---|
| 5 Min | -3 |
| 10 Min | -3 |
| 30 Min | +3 |
| 2 Std. | +5 |
| 24 Std. | +5 |

### Beispiel 1.4.6.

5 Teile des Pigmentes aus Beispiel 1.1 werden in Form eines hochkonzentrierten, sprühgetrockneten Presskuchens, wie in Beispiel 1.4.1 beschrieben, in 95Teile eines Polyester-Tonerbindemittels eingearbeitet und vermessen, wobei der Pigmentgehalt des gut rieselfähigen und staubarmen Presskuchens 81,3 % betrug. Der pH des Presskuchens wurde mit 6,9 bestimmt. Farbstärke, Farbton und Transparenz entsprechen den in Beispiel 1.2 beschriebenen Pigmentcharakteristiken.
In Abhängigkeit von der Aktivierdauer wurden folgende q/m-Werte [µC/g] gemessen.

| Aktivierdauer | Aufladung q/m [µC/g] |
|---|---|
| 5 Min | -14 |
| 10 Min | -13 |
| 30 Min | -13 |
| 2 Std. | -9 |
| 24 Std. | -6 |

### 1.5 Ink-Jet-Tinten auf wäßriger und nichtwäßriger Basis.

### 1.5.1

10 Teile einer feingemahlenen 50 %igen Pigmentpräparation (P.Y. 155) auf Basis von Polyvinylchlorid/Polyvinylacetat-Copolymerisat (z.B. ®Vinol 15/45 Fa.Wacker oder ®Vilith AS 42 Fa. Hüls), wobei die homogene Pigmentdispersion durch intensives Einkneten in das Copolymerisat erreicht wird, werden unter Rühren in eine Mischung von 80 Teilen Methyl-iso-butylketon und 10 Teilen 1,2-Propylenglykol mittels eines Dissolvers eingebracht.

Man erhält eine Ink-Jet-Tinte der folgenden Zusammensetzung:

| | |
|---|---|
| 5 Teile | C.I. Pigment Yellow 155 |
| 5 Teile | Polyvinylchlorid/Polyvinylacetat-Copolymer |
| 10 Teile | 1,2-Propylenglykol |
| 80 Teile | Methyl-iso-butylketon |

### 1.5.2

Zu 5 Teilen Pigment Yellow 155, das in Form einer 40 %igen ultrafeinen wäßrigen Pigmentpräparation vorliegt, werden unter Rühren (Flügelrührer oder Dissolver) zunächst 75 Teile deionisiertes Wasser und anschließend 6 Teile ®Mowilith DM 760 (Acrylatdispersion), 2 Teile Ethanol, 5 Teile 1,2-Propylenglykol und 0,2 Teile ®Mergal K7 zugegeben.

Man erhält eine Ink Jet Tinte der folgenden Zusammensetzung:
5 Teile Pigment Yellow 155
6 Teile Mowilith DM 760 (Acrylatdispersion)
2 Teile Ethanol
5 Teile 1,2-Propylenglykol
0,2 Teile Mergal K7
81,8 Teile deionisiertes Wasser.

### 1.5.3

Zu 5 Teilen C.I. Pigment Yellow 155, das in Form einer 40 gew.-%igen ultrafeinen wäßrigen Pigmentpräparation vorliegt, werden unter Rühren zunächst 80 Teile deionisiert Wasser, und anschließend 4 Teile ®Luviskol K30 (Polyvinylpyrrolidon, BASF), 5 Teile 1,2-Propylenglykol und 0,2 Teile Mergal K7 zugegeben.

Man erhält eine Ink-Jet-Tinte der folgenden Zusammensetzung:
5 Teile Pigment Yellow 155
4 Teile Luviskol K30 (Polyvinylpyrrolidon)
5 Teile 1,2-Propylenglykol
0,2 Teile Mergal K7
85,8 Teile deionisiertes Wasser.

### Beispiel 2

### 2.1 Synthese

### Diazokomponente

a) In eine Mischung von 70 Teilen Wasser, 111,5 Teilen Eisessig, 150 Teilen Salzsäure (30 %) und 0,3 Teilen Dinaphthylmethandisulfonsaures Natrium werden unter Rühren 104,5 Teile Aminoterephthalsäuredimethylester eingetragen und mindestens 4 Stunden gerührt. Durch Anlagen eines Eisbades und Zugabe von 100 Teilen Eis wird die Suspension auf ca. 0°C gekühlt, unter Niveau mit einer wässrigen Lösung (ca. 150 Teile) von 35,2 Teilen Natriumnitrit versetzt, unter Zugabe von Eis wird 1 Stunde bei 0° bis +5°C weiter gerührt, wobei die Suspension in eine klare, gelb-bräunliche Lösung übergeht. Danach wird der Nitritüberschuss durch Zugabe einer geringen Menge von Amidosulfonsäure-Lösung zerstört. Zur Reinigung wird die Lösung mit 5 Teilen handelsüblicher Filtererde versetzt, gerührt, der Rückstand abfiltriert, und mit wenig Wasser ausgewaschen.
b) Kupplungskomponente
   Zu 500 Teilen Wasser von 10°C fügt man 93,1 Teile NaOH (30 %), trägt 69,0 Teile 1,4-Bis-(acetoactylamino)-benzol ein, rührt ca. 30 Minuten, fügt danach 5,0 Teile Filtererde zu, rührt nach, filtriert die Lösung ab und wäscht mit wenig Wasser aus. Danach versetzt man diese Lösung im Verlaufe von 30 Minuten mit einer Lösung aus 400 Teilen Wasser, 400 Teilen Eis, 73,5 Teilen Eisessig und 53,2 Teilen NaOH (30 %).
c) Kupplung
   Zur Kupplung läßt man die Diazoniumsalzlösung gemäß a) im Verlaufe von 2 Stunden unter Niveau zur Suspension gemäß b) laufen, rührt zwei Stunden bei leicht ansteigender Temperatur, eine Stunde bei 40 bis 45°C, eine weitere Stunde bei 60 bis 65°C und schließlich eine Stunde bei 80°C. Der entstandene gelbe Niederschlag wird abfiltriert, mit kaltem Wasser bis zur Salzfreiheit gewaschen und unter Vakuum getrocknet (Restwassergehalt < 1 %).
d) Abschließende Behandlung
   71,6 Teile des so erhaltenen Rohpigments werden mit 570 Teilen Dimethylformamid 2 Stunden auf 150°C erhitzt, noch eine Stunde bei dieser Temperatur gerührt, auf 80 bis 100°C, gekühlt, abfiltriert, mit einem niedrigsiedenden Alkohol gewaschen, getrocknet und gemahlen.

### 2.2 Pigmentcharakteristik

| | |
|---|---|
| BET-Oberfläche | 35 m²/g |
| Restfeuchte | 0,3 % |
| Restsalzgehalt | 70 µS/cm |
| pH | 6,5 |
| Thermostabilität | deutlich größer als 300°C |
| (beginnende Zersetzung bei ca. 330°C) | |

### Teilchengröße:

d₂₅: 150 nm d₅₀: 200 nm d₇₅: 260 nm

### Teilchenform:

(Länge-zu-Breite-Verhältnis) ca: 3:1

### Röntenbeugungsdiagramm:

| 2 Theta | Intensität (relative Intensität) | | Halbwertsbreite 2 Theta |
|---|---|---|---|
| 5,5 | m | (13 %) | 0,5 |
| 10,0 | s | (71 %) | 0,4 |

| 2 Theta | Intensität (relative Intensität) | | Halbwertsbreite 2 Theta |
|---|---|---|---|
| 11,1 | m | (26%) | 0,4 |
| 16,7 | m | (22 %) | 0,6 |
| 17,6 | m | (11 %) | 0,5 |
| 19,2 | m | (26 %) | 0,6 |
| 20 | w | (4 %) | 0,5 |
| 21,8 | m | (17 %) | 0,6 |
| 25 | w | (5 %) | 0,5 |
| 26,8 | s | (100 %) | 0,6 |
| 28,9 | w | (4 %) | 0,5 |
| 30,3 | w | (4 %) | 0,8 |

### Dielektrische Kenndaten

| | |
|---|---|
| ε (1 KHz) | 5,0 |
| tanδ (1 KHZ) | 7·10⁻² |
| Ω cm | 1·10¹⁶ |

### 2.3 Transparenz

Gegenüber dem im Vergleichsbeispiel 2 angegebenen Standard wird bei ca. 80 %iger Farbstärke eine um 5 Bewertungseinheiten erhöhte Deckkraft bei deutlich grünerem Farbton gefunden.

### 2.4 Elektrostatische Eigenschaften

2.4.1 Es wird wie in Beispiel 1.4.1 beschrieben verfahren, wobei anstelle von 5 Teilen des Pigmentes aus Beispiel 1.1 nunmehr 5 Teile des Pigmentes aus Beispiel 3.1 eingearbeitet werden. In Abhängigkeit von der Aktivierdauer werden folgende q/m-Werte gemessen:

| Aktivierdauer | Aufladung q/m [µC/g] |
|---|---|
| 5 Min | -12 |
| 10 Min | -12 |
| 30 Min | -12 |
| 2 Std. | -10 |
| 24 Std. | -9 |

### 3. Polyesterharz ohne Pigment

100 Teile des in Beispiel 1.4.1 beschriebenen Tonerbindemittels (Polyester auf Bisphenol-A-Basis) werden ohne Pigmentzusatz wie in Beispiel 1.4.1 verarbeitet und anschließend vermessen.

In Abhängigkeit von der Aktivierdauer werden folgene q/m-Werte gemessen:

| Aktivierdauer | Aufladung q/m [µC/g] |
|---|---|
| 5 Min | -15 |
| 10 Min | -14 |
| 30 Min | -14 |
| 2 Std. | -14 |
| 24 Std. | -9 |

Es zeigt sich, daß P.Y. 155 den elektrostatischen Eigeneffekt des Tonerbindemittels kaum beeinflußt.

### Vergleichsbeispiel 1

Es wird ein Testtoner wie in Beispiel 1.4.1 beschrieben hergestellt und vermessen, wobei an Stelle von 5 Teilen des Pigmentes aus Beispiel 1.1 jetzt 5 Teile eines C.I. Pigment Yellow 180 (Benzimidazalonpigment, Herstellung siehe EP 0 705 886 A2 Beispiel 1.1) eingearbeitet werden.

In Abhängigkeit von der Aktivierdauer werden folgende q/m-Werte gemessen:

| Aktivierdauer | Aufladung g/m [µC/gl] |
|---|---|
| 5 Min | 0 |
| 10 Min | 0 |
| 30 Min | 0 |
| 2 Std. | -7 |
| 24 Std. | -8 |

### Vergleichsbeispiel 2

Es wird ein Testtoner wie in Beispiel 1.4.1 beschrieben hergestellt und vermessen, wobei an Stelle von 5 Teilen des Pigmentes aus Beispiel 1.1 jetzt 5 Teile eines C.I. Pigment Yellow 180 (kommerzielles ®Novoperm-Gelb P-HG, Clariant GmbH, siehe EP 0 705 886 A2 Vergleichsbeispiele) eingearbeitet werden.

In Abhängigkeit von der Aktivierdauer werden folgende q/m-Werte gemessen.

| Aktivierdauer | Aufladung q/m [µC/g] |
|---|---|
| 5 Min | -10 |
| 10 Min | -10 |
| 30 Min | -10 |
| 2 Std. | -20 |
| 24 Std. | -19 |

Beide Vergleichsbeispiele zeigen, daß P.Y. 180 den elektrostatischen Eigeneffekt des Tonerbindemittels stark beeinflußt.

### 4. Styrol-Acrylat-Harz ohne Pigment

Es wird wie in Beispiel 3 verfahren, wobei jedoch als Tonerbindemittel das Styrol-Acrylat-Copolymer aus Beispiel 1.4.4 verwendet wird. Als Carrier wird ebenfalls der in Beispiel 1.4.4 eingesetzte Magnetit verwendet.

In Abhängigkeit von den Aktivierdauer werden folgende q/m-Werte gemessen:

| Aktivierdauer | q/m [µl/g] |
|---|---|
| 5 Min | -5 |
| 10 Min | -7 |
| 30 Min | -11 |
| 2 Std. | -16 |
| 24 Std. | -22 |

## Patentansprüche

1. Verwendung eines Azopigments der Formel (1) 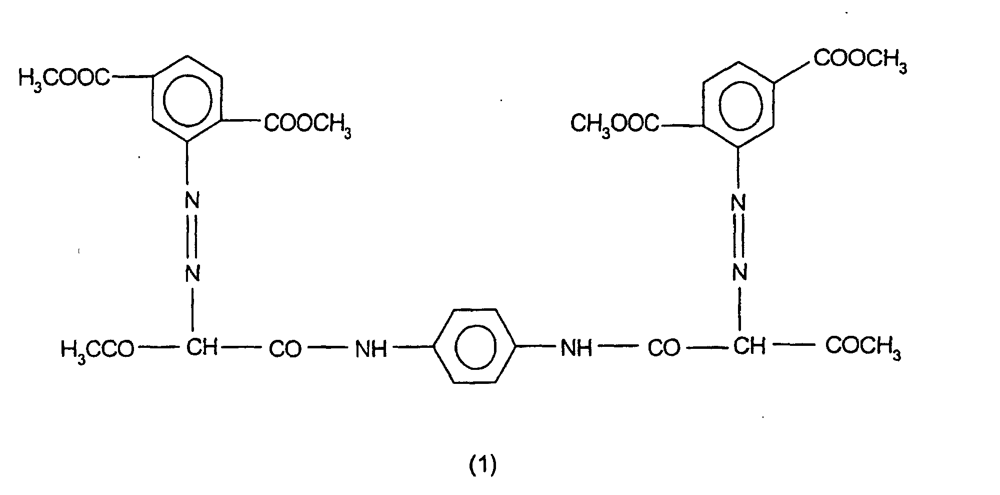 als Farbmittel in elektrophotographischen Tonern und Entwicklern, Elektretmaterialien, sowie in Ink-Jet-Tinten.

2. Verwendung nach Anspruch 1, **dadurch gekennzeichnet, daß** der elektrophotographische Toner ein Flüssigtoner oder ein Pulvertoner ist.

3. Verwendung nach Anspruch 1 oder 2, **dadurch gekennzeichnet, daß** das Azopigment der Formel (1) mit einem weiteren Pigment oder Farbstoff nuanciert ist.

4. Verwendung nach mindestens einem der Ansprüche 1 bis 3, **dadurch gekennzeichnet, daß** das gegebenenfalls nach Anspruch 3 nuancierte Azopigment der Formel (1) in Kombination mit einem Ladungssteuermittel aus der Klasse der Triphenylmethane,Ammonium- und Immoniumverbindungen; Iminiumverbindungen; fluorierte Ammonium- und Immoniumverbindungen; biskationische Säureamide; polymere Ammoniumverbindungen; Diallylammoniumverbindungen; Arylsulfid-Derivate; Phenolderivate; Phosphoniumverbindungen und fluorierte Phosphoniumverbindungen; Calix(n)arene; ringförmig verknüpfte Oligosaccharide (Cyclodextrine) und deren Derivate, insbesondere Borester-Derivate, Interpolyelektrolytkomplexe (IPECs); Polyestersalze; Metallkomplexverbindungen, insbesondere Salicylat-Metall- und Salicylat-Nichtmetallkomplexe, α-Hydroxycarbonsäure-Metall- und - Nichtmetallkomplexe; Benzimidazolone; Azine, Thiazine oder Oxazine eingesetzt wird.

5. Elektrophotographischer Toner oder Entwickler, enthaltend ein übliches Tonerbindemittel, 0,1 bis 60 Gew.-%, vorzugsweise 0,5 bis 20 Gew.-%, an ggf. nuanciertem Azopigment der Formel (1) gemäß Anspruch 1 oder 3 und 0 bis 20 Gew.-%, vorzugsweise 0,1 bis 5 Gew.-%, jeweils bezogen auf das Gesamtgewicht des Toners oder Entwicklers, eines Ladungssteuermittels aus der Klasse der Triphenylmethane, Ammonium- und Immoniumverbindungen; fluorierten Ammonium- und Immoniumverbindungen; biskationischen Säureamide; polymeren Ammoniumverbindungen; Diallylammoniumverbindungen; Arylsulfid-Derivate; Phenolderivate; Phosphoniumverbindungen und fluorierten Phosphoniumverbindungen; Calix(n)arene; Cyclodextrine; Polyestersalze; Metallkomplexverbindungen; Cyclooligosaccharid-Borkomplexe, Inter-Polyelektrolyt-Komplexe; Benzimidazolone; Azine, Thiazine und Oxazine.

6. Verfahren zur Herstellung eines elektrophotographischen Toners oder Entwicklers nach Anspruch 5, **dadurch gekennzeichnet, daß** das ggf. nuancierte Azopigment der Formel (1) und gegebenenfalls das Ladungssteuermittel in das Bindemittel oder Harz des jeweiligen Toners oder, Entwicklers eingearbeitet wird.

7. Verfahren nach Anspruch 6, **dadurch gekennzeichnet, daß** das ggf. nuancierte Azopigment der Formel (1) und gegebenenfalls das Ladungssteuermittel als getrocknetes und gemahlenes Pulver, als Suspension oder als Preßkuchen in das Bindemittel oder Harz eingearbeitet wird.

8. Verfahren nach Anspruch 7, **dadurch gekennzeichnet, daß** der Preßkuchen ein sprühgetrockneter Preßkuchen ist.

9. Ink-Jet-Tinte, enthaltend 0,5 bis 30 Gew.-%, vorzugsweise 1,5 bis 20 Gew.-%, bezogen auf das Gesamtgewicht der Tinte, des in Anspruch 1 oder 3 definierten, gegebenenfalls nuancierten Azopigments der Formel (1), 5 bis 99 Gew.-% Wasser und 0,5 bis 94,5 Gew.-% organisches Lösemittel oder/und hydrotrope Verbindung.

10. Ink-Jet-Tinte, enthaltend 0,5 bis 30 Gew.-%, vorzugsweise 1,5 bis 20 Gew.-%, bezogen auf das Gesamtgewicht der Tinte, des in Anspruch 1 oder 3 definierten, gegebenenfalls nuancierten Azopigments der Formel (1), 85 bis 94,5 Gew.-% organisches Lösemittel und/oder hydrotrope Verbindung.

11. Hot-melt Ink-Jet Tinte, bestehend aus 20 bis 90 Gew.-% Wachs, 1 bis 10 Gew.-% des in Anspruch 1 oder 3 definierten, gegebenenfalls nuancierten Azopigments der Formel (1),
0 bis 20 gew.-% eines polymeren Farbstofflösers,
0 bis 5 gew.-% Dispergierhilfsmittel,
0 bis 20 gew.-% Viskositätsveränderer,
0 bis 20 gew.-% Plastifizierer,
0 bis 10 gew.-% Klebrigkeitszusatz,
0 bis 10 gew.-% Transparenzstabilisator, sowie
0 bis 2 few.-% Antioxidans.

## Claims

1. The use of an azo pigment of the formula (1) 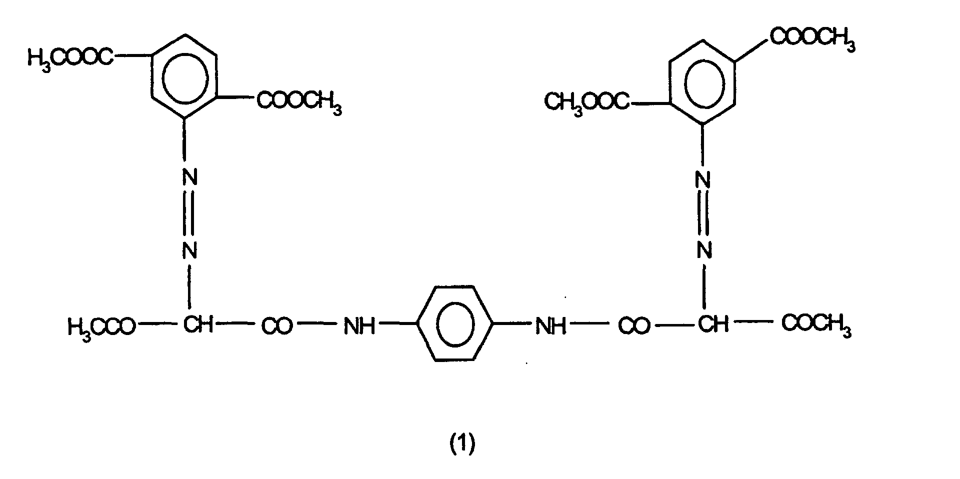 as a colorant in electrophotographic toners and developers, electret materials, and inkjet inks.

2. The use as claimed in claim 1, wherein the electrophotographic toner is a liquid toner or a powder toner.

3. The use as claimed in claim 1 or 2, wherein the azo pigment of the formula (1) is shaded with a further pigment or dye.

4. The use as claimed in at least one of claims 1 to 3, wherein the azo pigment of the formula (1), unshaded or shaded as claimed in claim 3, is employed in combination with a charge control agent from the class of the triphenylmethanes, ammonium and immonium compounds; iminium compounds; fluorinated ammonium and immonium compounds; biscationic acid amides; polymeric ammonium compounds; diallylammonium compounds; aryl sulfide derivatives; phenol derivatives; phosphonium compounds and fluorinated phosphonium compounds; calix(n)arenes; cyclically linked oligosaccharides (cyclodextrins) and their derivatives, especially boron ester derivatives, interpolyelectrolyte complexes (IPECs); polyester salts; metal complex compounds, especially salicylate metal and salicylate nonmetal complexes, α-hydroxycarboxylic acid-metal and -nonmetal complexes; benzimidazolones; and azines, thiazines or oxazines.

5. An electrophotographic toner or developer comprising a customary toner binder, from 0.1 to 60% by weight, preferably from 0.5 to 20% by weight, of shaded or unshaded azo pigment of the formula (1) as claimed in claim 1 or 3, and from 0 to 20% by weight, preferably from 0.1 to 5% by weight, based in each case on the overall weight of the toner or developer, of a charge control agent from the class of the triphenylmethanes, ammonium and immonium compounds; fluorinated ammonium and immonium compounds; biscationic acid amides; polymeric ammonium compounds; diallylammonium compounds; aryl sulfide derivatives; phenol derivatives; phosphonium compounds and fluorinated phosphonium compounds; calix(n)arenes; cyclodextrins; polyester salts; metal complex compounds; cyclooligosaccharide boron complexes, interpolyelectrolyte complexes; benzimidazolones; azines, thiazines and oxazines.

6. A process for preparing an electrophotographic toner or developer, powder as claimed in claim 5, which comprises incorporating the unshaded or shaded azo pigment of the formula (1) and, if desired, the charge control agent into the binder or resin of the respective toner or developer.

7. The process as claimed in claim 6, wherein the unshaded or shaded azo pigment of the formula (1) and, if desired, the charge control agent are incorporated as a dried and ground powder, as a suspension or as a presscake into the binder or resin.

8. The process as claimed in claim 7, wherein the presscake is a spray-dried presscake.

9. An inkjet ink comprising from 0.5 to 30% by weight, preferably from 1.5 to 20% by weight, based on the overall weight of the ink, of the shaded or unshaded azo pigment of formula (1) defined in claim 1 or 3, from 5 to 99% by weight of water and from 0.5 to 94.5% by weight of organic solvent and/or hydrotropic compound.

10. An inkjet ink comprising from 0.5 to 30% by weight, preferably from 1.5 to 20% by weight, based on the overall weight of the ink, of the shaded or unshaded azo pigment of formula (1) defined in claim 1 or 3, from 85 to 94.5% by weight of organic solvent and/or hydrotropic compound.

11. A hotmelt inkjet ink consisting of from 20 to 90% by weight of wax, from 1 to 10% by weight of the unshaded or shaded azo pigment of the formula (1) defined in claim 1 or 3,
from 0 to 20% by weight of a polymeric dye solvent,
from 0 to 5% by weight of dispersing auxiliaries,
from 0 to 20% by weight of viscosity modifiers,
from 0 to 20% by weight of plasticizers,
from 0 to 10% by weight of tack additive,
from 0 to 10% by weight of transparency stabilizer and
from 0 to 2 % by weight of antioxidant.

## Revendications

1. Utilisation d'un pigment azoïque de formule (1) 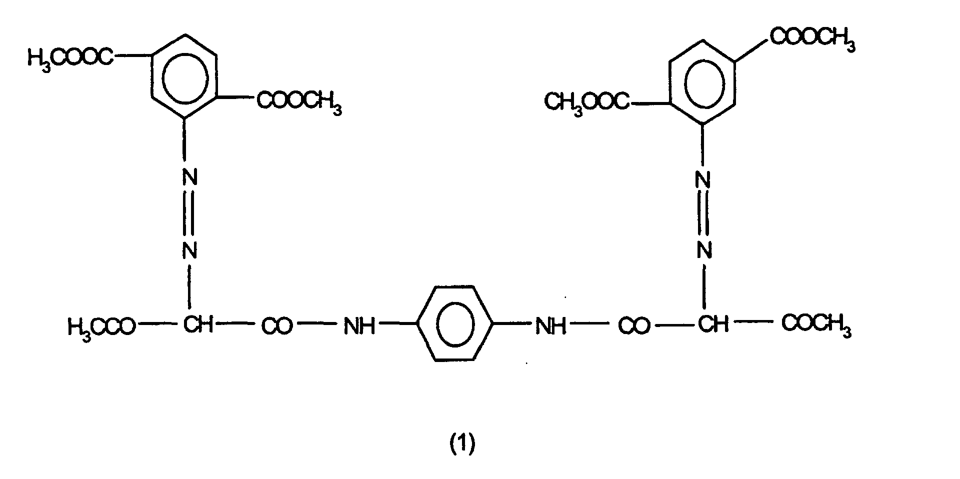 comme colorant dans des toners et des révélateurs électrophotographiques, des matériaux d'électrets ainsi que dans des encres d'impression par jet.

2. Utilisation selon la revendication 1, **caractérisée en ce que** le toner électrophotographique est un toner liquide ou un toner en poudre.

3. Utilisation selon la revendication 1 ou 2,
**caractérisée en ce que** le pigment azoïque de formule (1) est nuancé avec un autre pigment ou colorant.

4. Utilisation selon au moins une des revendications 1 à 3, **caractérisée en ce que** le pigment azoïque de formule (1) éventuellement nuancé selon la revendication 3 est utilisé en combinaison avec un agent de contrôle de charge de la classe du triphénylméthane, des composés ammonium et immonium ; des composés iminium ; des composés ammonium et immonium fluorés ; des amides d'acides biscationiques ; des composés d'ammonium polymères ; des composés diallylammonium ; des dérivés arylsulfure ; des dérivés phénol ; des composés phosphonium et des composés phosphonium fluorés ; des calix(n)arènes ; des oligosaccharides cycliques reliés (cyclodextrines) et leurs dérivés, en particulier les dérivés ester de bore, les complexes de co-poly-électrolytes (IPEC) ; des sels de type polyester ; des composés complexes métalliques, en particulier les complexes métal-salicylate et métalloïde-salicylate, les complexes métal- et métalloïde-acide α-hydroxy-carboxylique ; des benzimidazolones ; azines ; thiazines ou oxazines.

5. Toner ou révélateur électrophotographique, contenant un liant pour toner usuel, de 0,1 à 60 % en poids, de préférence de 0,5 à 20 % en poids, d'un pigment azoïque de formule (1) selon la revendication 1 ou 3 éventuellement nuancé et de 0 à 20 % en poids, de préférence de 0,1 à 5 % en poids, respectivement par rapport au poids total du toner ou du révélateur, d'un agent de contrôle de charge dans la classe des triphénylméthanes, des composés ammonium et immonium, des composés ammonium et immonium fluorés ; des amides d'acides biscationiques ; des composés d'ammonium polymères ; des composés diallylammonium ; des dérivés arylsulfure ; des dérivés phénol ; des dérivés phosphonium et des dérivés phosphonium fluorés ; des calix(n)arènes ; des cyclodextrines ; des sels de type polyester ; des composés complexes métalliques ; des complexes bore-cyclooligosaccharide, des complexes de co-polyélectrolytes ; des benzimidazolones ; azines ; thiazines et oxazines.

6. Procédé pour la préparation d'un toner ou révélateur électrophotographique selon la revendication 5, **caractérisé en ce qu'**on incorpore le pigment azoïque de formule (1) éventuellement nuancé et éventuellement l'agent de contrôle de charge dans le liant ou la résine du toner ou du révélateur concerné.

7. Procédé selon la revendication 6, **caractérisé en ce qu'**on incorpore le pigment azoïque de formule (1) éventuellement nuancé et éventuellement l'agent de contrôle de charge sous la forme de poudre séchée et broyée, sous la forme de suspension ou sous la forme de gâteau de filtre presse dans le liant ou la résine.

8. Procédé selon la revendication 7, **caractérisé en ce que** le gâteau de filtre presse est un gâteau de filtre presse séché par pulvérisation.

9. Encre d'impression par jet, contenant de 0,5 à 30 % en poids, de préférence de 1,5 à 20 % en poids, par rapport au poids total de l'encre, du pigment azoïque de formule (1) éventuellement nuancé, défini à la revendication 1 ou 3, de 5 à 99 % en poids d'eau et de 0,5 à 94,5 % en poids de solvant organique et/ou un composé hydrotrope.

10. Encre d'impression par jet, contenant de 0,5 à 30 % en poids, de préférence de 1,5 à 20 % en poids, par rapport au poids total de l'encre, du pigment azoïque de formule (1) éventuellement nuancé, défini à la revendication 1 ou 3, de 85 à 94,5 % en poids de solvant organique et/ou un composé hydrotrope.

11. Encre d'impression par jet, thermofusible, constituée de 20 à 90 % en poids de cire, 1 à 10 % en poids du pigment azoïque de formule (1) éventuellement nuancé, défini à la revendication 1 ou 3,
0 à 20 % en poids d'un solvant de colorant polymère,
0 à 5 % en poids d'un adjuvant de dispersion,
0 à 20 % en poids d'un agent modifiant la viscosité,
0 à 20 % en poids d'un plastifiant,
0 à 10 % en poids d'un additif d'adhésivité,
0 à 10 % en poids d'un stabilisateur de transparence, ainsi que
0 à 2 % en poids d'un antioxydant.
